# EUROPEAN PATENT SPECIFICATION

(11) **EP 3 348 852 B1**
(45) Date of publication and mention of the grant of the patent: **29.04.2020**
(21) Application number: 18150906.8
(22) Date of filing: 09.01.2018
(51) Int. Cl.: F16D 1/10, F16D 3/18

(54) **CROWNING OF A SPLINE IN A DIRECTION PERPENDICULAR TO A SPLINE TOOTH FACE**
BOMBIERUNG EINES KEILS IN SENKRECHTER RICHTUNG ZU EINER KEILZAHNFLÄCHE
BOMBEMENT D'UNE CANNELURE DANS UNE DIRECTION PERPENDICULAIRE À LA FACE DE LA DENT CANNELÉE

(30) Priority: 15.01.2017 US 201715406745
(43) Date of publication of application: 18.07.2018
(73) Proprietor: Bell Helicopter Textron Inc., Fort Worth, TX 76101 (US)
(72) Inventor: OLSON, Eric Stephen, Fort Worth, TX 76110 (US)
(74) Representative: Barker Brettell LLP

(56) References cited:
- US-A- 2 841 966
- US-A- 3 224 223
- US-A- 4 132 090
- US-A1- 2014 193 195
- US-B2- 7 156 628

## Description

### TECHNICAL FIELD

This disclosure generally relates to spline connections, and more particularly, to spline connections in which one of the sets of spline teeth comprises crowned, external spline teeth.

### PRIOR ART

US 2014/193195 A1 discloses a toothing, in particular of a drive spindle for driving a roll in rolling mills or continuous casting plants, which comprises several teeth and meshes with a second toothing in the manner of a spline. A flank line of the teeth has a curvature and a deflection angle is formed between the rotational axis of the second toothing and the rotational axis of the toothing. The toothing is designed as having at least one of: a tooth root relief of the teeth, a tooth tip relief of the teeth, and a twist of the teeth.

US 2 841 966 A discloses a flexible coupling comprising an outer gear element having a circular series of inwardly extending teeth, and an inner gear element comprising a disc-like body portion having a like circular series of outwardly extending teeth on its periphery. The gear elements are positionable with the outer gear element surrounding the inner gear element, and with the teeth of the gear elements in mutually meshed engagement. Means by which one shaft may drive the other through the tooth engagement comprise connecting parts between the respective gear elements and shafts to cause them to rotate respectively with the shafts. The teeth of the gear elements are constructed so that the drive will occur without back-lash and without binding at the tooth engagement, when the rotational axes of the gear elements are at any angle of axial misalignment. The tooth construction of the outer gear element comprises teeth that extend substantially rectilinearly parallel to its axis. The tooth construction of the inner gear element comprises tooth spaces between adjacent teeth having bottom surfaces disposed to define the side surfaces of two geometrical cones having a common base in a plane of the body portion between its sides, and having cone apices in the axis of the body portion spaced from the opposite sides thereof. The teeth are involute, have a known pressure angle, and have greatest thickness at a portion thereof in the plane of the common cone base, and taper therefrom in opposite directions toward the sides of the body portion. The angle of each cone between its axis and a side thereof is equal to the preselected maximum angle of misalignment, multiplied by the value of the cotangent of the said known pressure angle.

US 4 132 090 A discloses a drive shaft of the type used in a rotary fluid pressure device including an input-output shaft and a gerotor gear set. An externally toothed member orbits and rotates within an internally toothed member. Both the input-output shaft and the externally toothed member define straight internal splines, and the drive shaft includes a set of crowned, involute external splines at each end thereof, in engagement with the respective straight internal splines. The crowned external splines are hobbed with a hob on which the cutter teeth have a pressure angle greater than the primary pressure angle of the crowned splines.

US 3 224 223 A discloses a toothed coupling comprising an internally toothed outer member with longitudinally straight teeth and an externally toothed inner member with crowned teeth engaging the straight teeth and extending lengthwise along continuous convex curves. The straight teeth have concavely curved tooth profiles, whilst the crowned teeth have convex tooth profiles in planes perpendicular to the axis of rotation of said inner member. The inclination of the convex profiles to the radial direction, at a constant distance from the axis of rotation, is at least as large adjacent a tooth end as at the tooth middle, the convex profiles being more curved than the concave profiles and at their mid-portion being less inclined to the radial direction than said concave profiles so that they contact said concave tooth profiles in a region between said mid-portion and their outside ends when the axes of the two members are aligned.

According to the present invention there is provided a drive shaft according to claim 1. Optional or preferred features are described in the dependent claim.

### BRIEF DESCRIPTION OF THE DRAWINGS

Embodiments are illustrated by way of example in the accompanying figures, in which like reference numbers indicate similar parts, and in which:
**Figure 1** shows a schematic diagram of an example of a tiltrotor aircraft;
**Figure 2** shows a schematic diagram of an example of a rotorcraft;
**Figure 3** shows a detailed perspective, cutaway view of a shaft in accordance with the present disclosure;
**Figure 4** shows an end view of the shaft shown in Figure 3;
**Figure 5** shows an end view of a prior shaft;
**Figures 6A and 6B** show manufacturing processes for forming the shaft shown in Figure 3;
**Figures 7A** **and** **7B** show contact stress diagrams associated with the prior shaft shown in Figure 5; and
**Figures 8A** **and** **8B** show contact stress diagrams associated with the shaft shown in Figure 3.

### DETAILED DESCRIPTION

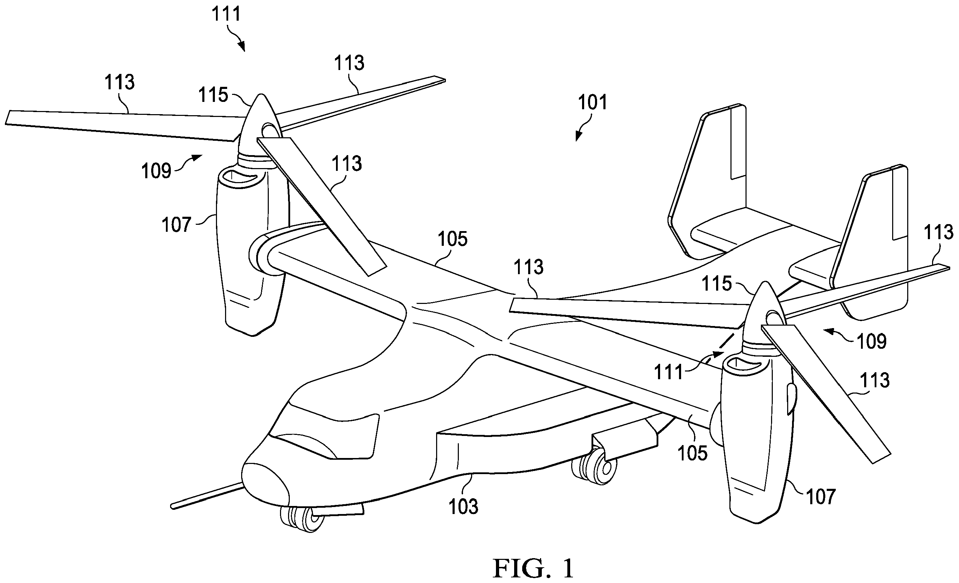

Figure 1 shows a schematic diagram of an example tiltrotor aircraft 101. Aircraft 101 includes a fuselage 103 with attached wings 105. Nacelles 107 are carried at the outboard ends of wings 105 and are rotatable between the helicopter-mode position shown and a forward-facing airplane-mode position (not shown). Nacelles 107 carry engines and drive train subassemblies 109 for powering rotor systems 111 in rotation. An engine may be an internal combustion engine, an electrical power source and associated motor, or any other suitable means for powering rotor system 111. Each rotor system 111 is illustrated as having three blades 113. Spinning covers 115 and nacelles 107 substantially enclose drive train subassemblies 109, obscuring drive train subassemblies 109 from view in figure 1. The drive train subassemblies 109 can each include a gearbox, shafts, and various couplings.

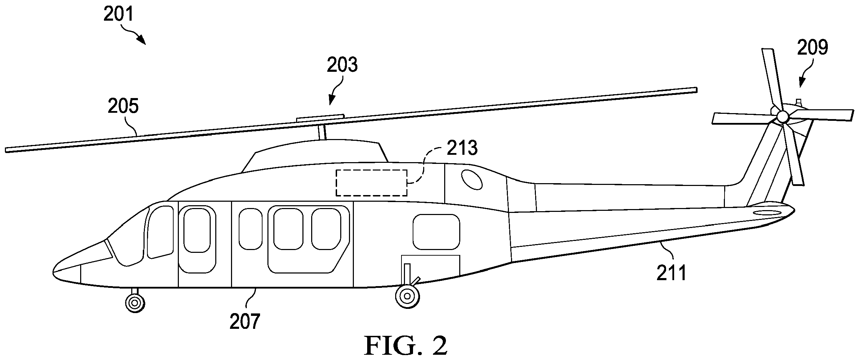

Figure 2 shows a schematic diagram of an example rotorcraft 201. Rotorcraft 201 has a rotor system 203 with multiple rotor blades 205. The pitch of each rotor blade 205 can be manipulated in order to selectively control direction, thrust, and lift of rotorcraft 201. Rotorcraft 201 can further include a fuselage 207, anti-torque system 209, and an empennage 211. The rotorcraft 201 includes a drive train, including a drive train subassembly generally indicated at 213 for driving the rotor system 203. The drive train subassembly 213 can include a gearbox, shafts, and couplings.

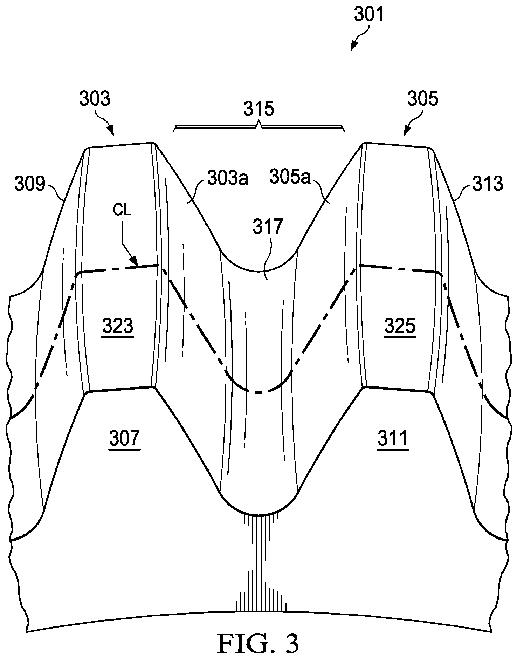

Figure 3 shows a detailed perspective, cutaway view of a shaft 301 manufactured or otherwise configured in accordance with the present disclosure. The shaft 301 can be used as part of the drive train subassembly 109 or drive train subassembly 213, both of which include various spline connections. The present disclosure is applicable wherever a shaft, such as shaft 301, is provided with a set of crowned external spline teeth for transmitting torque to or from an internal spline. The present disclosure is particularly advantageous where the axis of the shaft having the external spline is not parallel to the axis of the element associated with the internal spline.

The shaft 301 includes first and second spline teeth 303, 305. The first spline tooth 303 extends longitudinally between a front surface 307 thereof and a rear surface 309 thereof. The second spline tooth 305 extends longitudinally between a front surface 311 thereof and a rear surface 313 thereof. Also, the first spline tooth 303 includes a tooth side wall 303a that extends from a root portion 317 to a tip portion 323 of the tooth 303, and the second spline tooth 305 includes a tooth side wall 305a that extends from the root portion 317 to a tip portion 325 of the tooth 305. The first and second spline teeth 303, 305 are separated by a groove 315. The spline teeth 303, 305 and groove 315 are representative of a series of equally spaced spline teeth and grooves that extend about the outside of the shaft 301. The first and second spline teeth 303, 305 are crowned and have an involute form. Also, as discussed in greater detail below, the spline teeth 303, 305 are configured to allow for angular misalignment between the shaft 301 and mating spline connections.

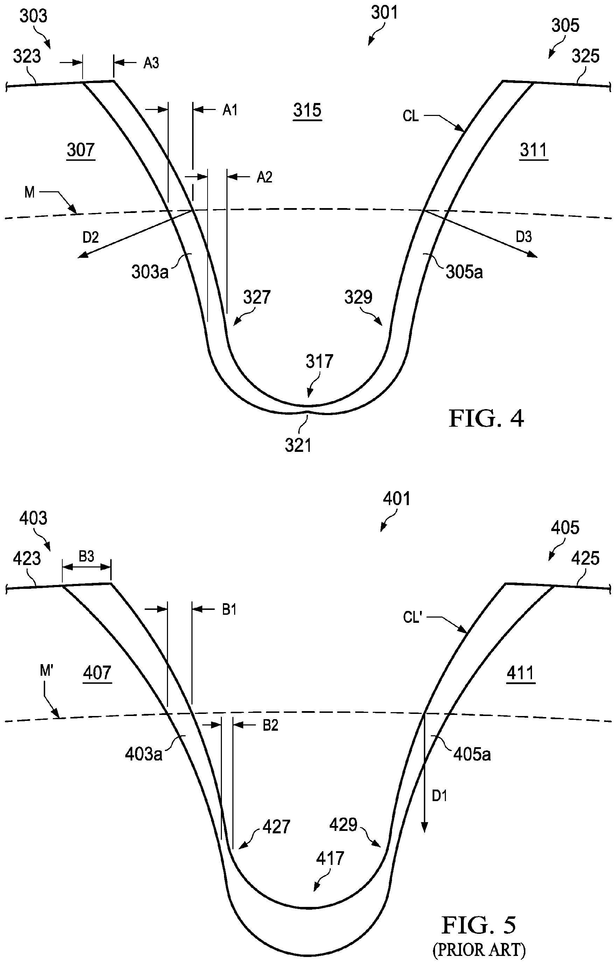

Reference is now also made to Figure 4, which shows an end view of a portion of the first and second spline teeth 303, 305 and the groove 315. As shown in Figure 4, the adjoining spline teeth 303, 305 are joined by a full fillet root portion 317. However, the shape of the root portion 317 can vary. For example, the root portion 317 can alternatively be a flat root as opposed to a filet root.

As shown in Figures 3 and 4, the spline teeth 303, 305 are crowned such that their respective side walls 303a, 305a each have a crown drop between a centerline CL across the spline teeth 303, 305 and their respective front surfaces 307, 311. The crown drop is also equally present between the centerline CL the rear surfaces 309, 313. The crown drop dimension is typically measured at the midpoint (along line M) of the teeth side walls 303a, 305a between the root portion 317 and the respective tip portions 323, 325. The midpoint crown drop dimension is shown in Figure 4 as crown drop A1.

Figure 5 shows an end view of a prior shaft 401. Shaft 401 includes a root portion 417 between adjoining spline teeth 403 and 405. Like shaft 301, the shaft 401, the teeth 403, 405 are crowned such that their respective side walls 403a, 405a each have a crown drop between a centerline CL' across the spline teeth 403, 405 and their respective front surfaces 407, 411. The crown drop dimension is typically measured at the midpoint region (along line M') of the teeth side walls 403a, 405a between the root portion 417 and the respective tip portions 423, 425. The midpoint crown drop dimension is shown in Figure 5 as crown drop B1.

Referring to Figures 4 and 5, it will be noted that additional crown drop dimensions can be defined near the respective tips and roots of the spline teeth. In Figure 4, a second crown drop dimension A2 is defined from the centerline CL to the respective front surfaces 307, 311 of the teeth 303, 305 at respective base portions 327, 329 near the root portion 317 of the teeth 303, 305. Also in Figure 4, a third crown drop dimension A3 is defined from the centerline CL to the respective front surfaces 307, 311 of the teeth 303, 305 near the respective tip portions 323, 325 of the teeth 303, 305. Similarly, in Figure 5, a second crown drop dimension B2 is defined from the centerline CL' to the respective front surfaces 407, 411 of the teeth 403, 405 at respective base portions 427, 429 near the root portion 417 of the teeth 403, 405. Also in Figure 5, a third crown drop dimension B3 is defined from the centerline CL to the respective front surfaces 407, 411 of the teeth 403, 405 near the respective tip portions 423, 425 of the teeth 403, 405.

Comparing Figures 4 and 5, it should be noted that the spline shaft 301 of the present disclosure has a consistent crown drop along the sides of the teeth 303, 305. For example, the crown drop dimensions A1, A2, and A3 are equal or substantially equal. In contrast, the crowning of the teeth 403, 405 changes along the sides of the teeth 403, 405 such that the crown drop dimension B1 is greater than B2 and is less than B3.

The phenomenon that causes the varying crown drops in the prior spline shaft 401 results from prior manufacturing processes that involved plunging a grinding wheel radially into a spline shaft blank (direction D1 in Figure 5) and then drawing the grinding wheel 501 in a "rise-and-fall" motion along the longitudinal length of the blank to form the teeth 403, 405. However, as will be explained in greater detail below, the inconsistent crowning along the height of the teeth 403, 405 results in undesirable contact patterns between the teeth 403, 405 and teeth of another spline that is driving or being driven by the shaft 401.

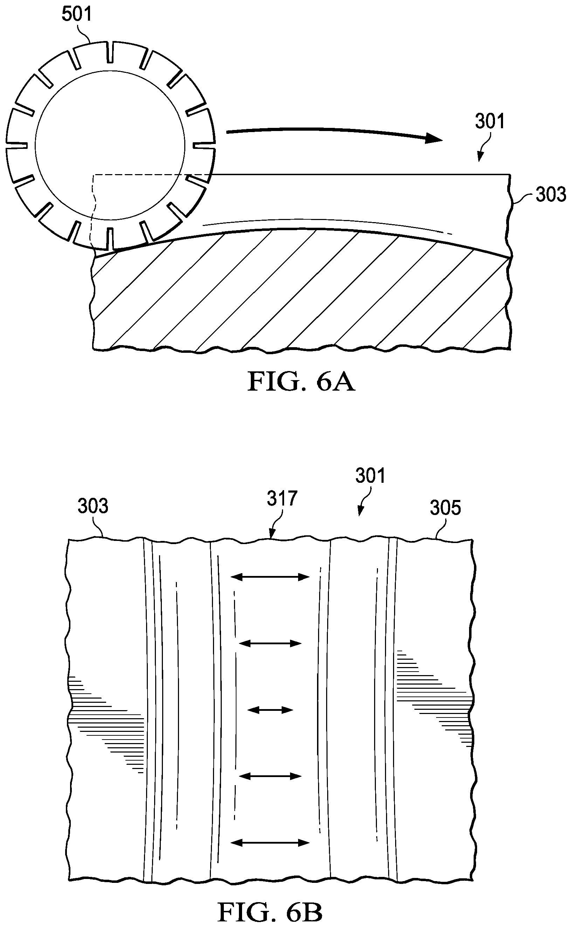

Turning next to Figures 6A and 6B, the crowned spline teeth 303 and 305 can be manufactured by a process that includes "rise-and-fall" longitudinal milling, as shown in Figure 6A, in combination with lateral milling, as shown in Figure 6B. Figure 6A shows a cross-sectional view of the shaft 301 during a manufacturing process where a grinding wheel 501 proceeds to cut the groove 315 as the grinding wheel 501 is fed axially toward the shaft 301 blank and drawn longitudinally in a direction indicated by the arrow in Figure 6A that is somewhat parallel to the blank's axis of rotation. However, as the grinding wheel 501 is fed axially toward the shaft 301 blank, the shaft 301 is rotated about its axis in directions indicated in Figure 6B, resulting in the grinding wheel 501 plunging into the shaft 301 blank at least twice between the teeth 303, 305, once in each of the directions D2 and D3 indicated in Figure 4, which are at least somewhat perpendicular to the faces of the spline teeth 303 and 305.

It should be understood that the grinding operation shown in Figure 6A can be combined with the grinding operation shown in Figure 6B by maintaining the spline shaft 301 blank in a fixed position and plunging the milling wheel 501 into the shaft 301 blank in the directions D2 and D3. It is also noted that since the milling wheel 501 is plunged into the shaft 301 blank in both the directions D2 and D3 (perpendicular to the wall of each of the teeth 303, 305), a ridge 321 can result in the root portion 317.

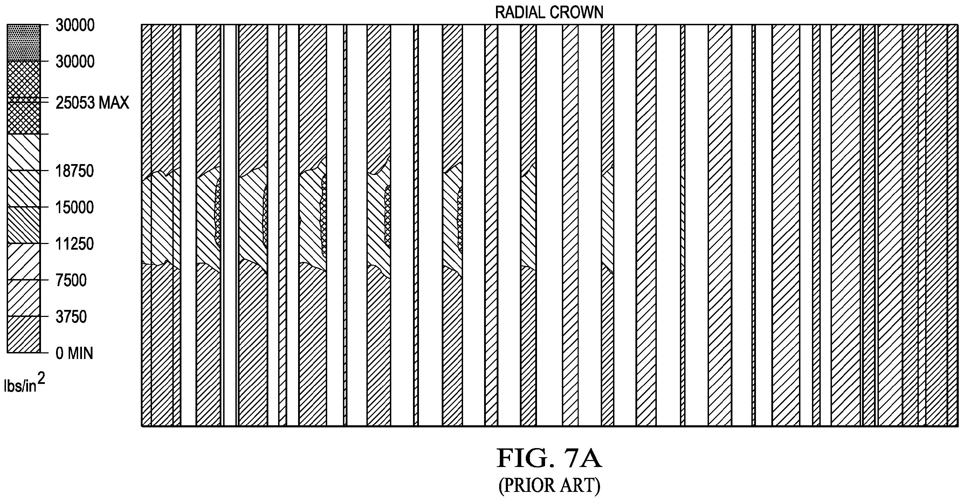

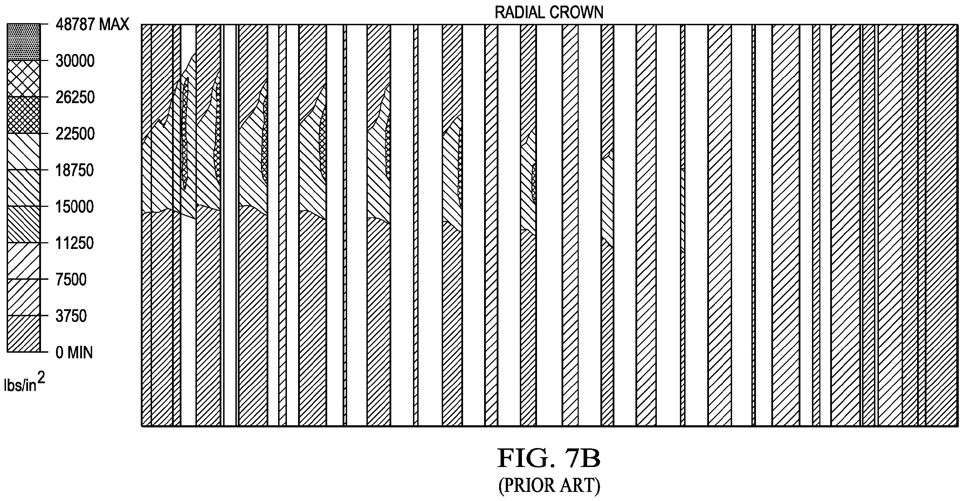

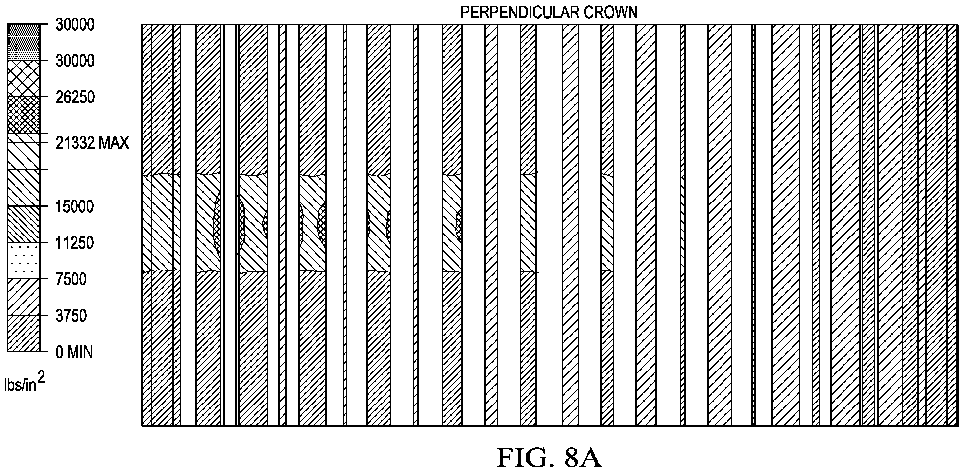

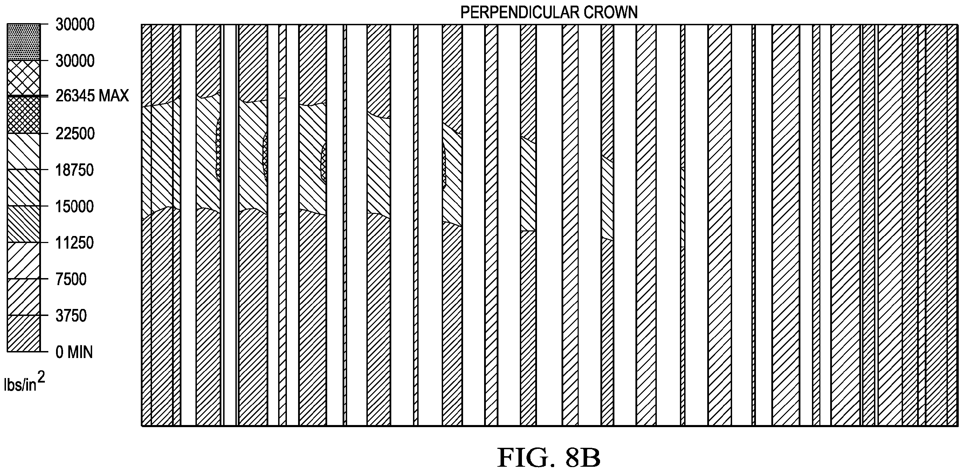

Turning next to Figures 7A-8B, the crowning between the spline teeth 303 and 305 that results from the manufacturing process disclosed herein eliminates much of the edge loading seen with radial crowns as the shaft 301 is misaligned with teeth of a connected gear or the like. This reduction in contact stress at higher misalignments can be useful in situations where the weight and envelope space for a spline is constrained, such as in aircraft applications. For example, Figure 7A shows a diagram indicating the loading between spline teeth when prior shaft 401 is substantially aligned with mating spline teeth and Figure 7B shows a diagram indicating the loading between spline teeth when prior shaft 401 is substantially misaligned with mating spline teeth. As shown in Figure 7B, as misalignment increases, the stress pattern between contacting spline teeth also becomes increasingly uneven using prior spline crowning designs and manufacturing processes. Figure 8A shows a diagram indicating the loading between spline teeth when the present shaft 301 is substantially aligned with mating spline teeth and Figure 8B shows a diagram indicating the loading between spline teeth when the present shaft 301 is substantially misaligned with mating spline teeth. Compared to Figure 7B, Figure 8B shows that as misalignment increases, the stress pattern between contacting spline teeth continues to maintain a more even contact stress pattern as a result of the crowning disclosed herein.

While various embodiments in accordance with the principles disclosed herein have been described above, it should be understood that they have been presented by way of example only, and are not limiting. Thus, the breadth and scope of the claims should not be limited by any of the above-described exemplary embodiments, but should be defined only in accordance with the claims and their equivalents issuing from this disclosure. Furthermore, the above advantages and features are provided in described embodiments, but shall not limit the application of such issued claims to processes and structures accomplishing any or all of the above advantages.

## Claims

1. A drive shaft (301) comprising:
a first external crowned spline tooth (303) including a first spline tooth side wall (303a) extending from a first base portion (327) to a flat first tip portion (323) of the first spline tooth, the first spline tooth further including a first midpoint region between the first base portion and the first tip portion wherein the flat first tip portion (323) is located on an axial centerline and is orthogonal to a center axis of the drive shaft (301);
a second external crowned spline tooth (305) having a second spline tooth side wall (305a) extending from a second base portion (329) to a flat second tip portion (325) of the second spline tooth, the second spline tooth further including a second midpoint region between the second base portion and the second tip portion, wherein the flat second tip portion (325) is located on the axial centerline and is orthogonal to the center axis of the drive shaft (301); and
a groove defined by the first and second spline tooth side walls between the first and second spline teeth, and further defined by a root portion (317) between the first and second base portions of the first and second spline teeth;
wherein the first spline tooth side wall has a first crown drop (A2) at a base region thereof;
wherein the first spline tooth side wall has a second crown drop (A1) at a midpoint region thereof;
wherein the first spline tooth side wall has a third crown drop (A3) at the first tip portion thereof, the third crown drop being measured between two points along the first flat tip portion;
wherein at least two of the first crown drop, the second crown drop, and the third crown drop are equal to each other
wherein no portion of the first external crowned spline tooth (303) is radially undercut and no portion of the second external crowed spline tooth (305) is radially undercut;
wherein the first external crowned spline tooth (303), the second external crowned spline tooth (305), and the root portion (317) are each symmetrical about an axial centerline; and
wherein the root portion (317) located both at the centerline and angularly centered between the first external crowned spline tooth (303) and the second external crowned spline tooth (305) is concave, and any amount of crown drop associated with the root portion (317) does not exceed any of the first crown drop (A2), the second crown drop (A1), and the third crown drop (A3).

2. The drive shaft of claim 1, wherein the first crown drop, the second crown drop, and the third crown drop is between a centerline of the first spline tooth and a front surface (307) of the first spline tooth.

## Patentansprüche

1. Antriebswelle (301), die Folgendes umfasst:
einen ersten äußeren balligen Keilzahn (303), der eine erste Keilzahnseitenwand (303a) umfasst, die sich von einem ersten Basisabschnitt (327) zu einem flachen ersten Spitzenabschnitt (323) des ersten Keilzahns erstreckt, wobei der erste Keilzahn ferner einen ersten Mittelpunktbereich zwischen dem ersten Basisabschnitt und dem ersten Spitzenabschnitt umfasst, wobei der flache erste Spitzenabschnitt (323) auf einer axialen Mittellinie positioniert ist und zu einer Mittelachse der Antriebswelle (301) orthogonal ist;
einen zweiten äußeren balligen Keilzahn (305), der eine zweite Keilzahnseitenwand (305a) umfasst, die sich von einem zweiten Basisabschnitt (329) zu einem flachen zweiten Spitzenabschnitt (325) des zweiten Keilzahns erstreckt, wobei der zweite Keilzahn ferner einen zweiten Mittelpunktbereich zwischen dem zweiten Basisabschnitt und dem zweiten Spitzenabschnitt umfasst, wobei der flache zweite Spitzenabschnitt (325) auf einer axialen Mittellinie positioniert ist und zu einer Mittelachse der Antriebswelle (301) orthogonal ist; und
eine Nut, die durch die erste und die zweite Keilzahnseitenwand zwischen dem ersten und dem zweiten Keilzahn definiert wird und ferner durch einen Wurzelabschnitt (317) zwischen dem ersten und dem zweiten Basisabschnitt des ersten und des zweiten Keilzahns definiert wird;
wobei die erste Keilzahnseitenwand einen ersten Ballungsabfall (A2) an einem Basisbereich davon aufweist;
wobei die erste Keilzahnseitenwand einen zweiten Ballungsabfall (A1) an einem Mittelpunktbereich davon aufweist;
wobei die erste Keilzahnseitenwand einen dritten Ballungsabfall (A3) an dem ersten Spitzenabschnitt davon aufweist, wobei der dritte Ballungsabfall zwischen zwei Punkten entlang dem ersten flachen Spitzenabschnitt gemessen wird;
wobei mindestens zwei unter dem ersten Ballungsabfall, dem zweiten Ballungsabfall und dem dritten Ballungsabfall gleich sind;
wobei kein Abschnitt des ersten äußeren balligen Keilzahns (303) radial unterschnitten ist und kein Abschnitt des zweiten äußeren balligen Keilzahns (305) radial unterschnitten ist;
wobei der erste äußere balligen Keilzahn (303), der zweite äußere balligen Keilzahn (305) und der Wurzelabschnitt (317) alle um eine axiale Mittellinie symmetrisch sind; und
wobei der Wurzelabschnitt (317), der sowohl bei der Mittellinie als auch winkelmäßig zentriert zwischen dem ersten äußeren balligen Keilzahn (303) und dem zweiten äußeren balligen Keilzahn (305) positioniert ist, konkav ist, und jegliches Ausmaß an dem Wurzelabschnitt (317) zugeordnetem Ballungsabfall keinen unter dem ersten Ballungsabfall (A2), dem zweiten Ballungsabfall (A1) und dem dritten Ballungsabfall (A3) übersteigt.

2. Antriebswelle nach Anspruch 1, wobei der erste Ballungsabfall, der zweite Ballungsabfall und der dritte Ballungsabfall zwischen einer Mittellinie des ersten Keilzahns und einer vorderen Fläche (307) des ersten Keilzahns liegen.

## Revendications

1. Arbre d'entraînement (301) comprenant :
une première dent cannelée externe bombée (303) comprenant une paroi latérale de première dent cannelée (303a) s'étendant d'une première partie de base (327) à une première partie de pointe plate (323) de la première dent cannelée, la première dent cannelée comprenant en outre une première zone médiane entre la première partie de base et la première partie de pointe, la première partie de pointe plate (323) étant située sur une ligne centrale axiale et étant orthogonale à un axe central de l'arbre d'entraînement (301) ;
une seconde dent cannelée externe bombée (305) ayant une paroi latérale de seconde dent cannelée (305a) s'étendant d'une seconde partie de base (329) à une seconde partie de pointe plate (325) de la seconde dent cannelée, la seconde dent cannelée comprenant en outre une seconde zone médiane entre la seconde partie de base et la seconde partie de pointe, la seconde partie de pointe plate (325) étant située sur la ligne centrale axiale et étant orthogonale à l'axe central de l'arbre d'entraînement (301) ; et
une rainure définie par les parois latérales des première et seconde dents cannelées entre les première et seconde dents cannelées, et définie en outre par une partie de racine (317) entre les première et seconde parties de base des première et seconde dents cannelées ;
la paroi latérale de la première dent cannelée présentant une première chute bombée (A2) dans une zone de base de celle-ci ;
la paroi latérale de la première dent cannelée présentant une deuxième chute bombée (A1) dans une zone médiane de celle-ci ;
la paroi latérale de la première dent cannelée présentant une troisième chute bombée (A3) au niveau de la première partie de pointe de celle-ci, la troisième chute bombée étant mesurée entre deux points le long de la première partie de pointe plate ;
au moins deux chutes parmi la première chute bombée, la deuxième chute bombée et la troisième chute bombée étant égales l'une à l'autre,
aucune partie de la première dent cannelée externe bombée (303) n'étant radialement contre-dépouillée et aucune partie de la seconde dent cannelée externe bombée (305) n'étant radialement contre-dépouillée ;
la première dent cannelée externe bombée (303), la seconde dent cannelée externe bombée (305) et la partie de racine (317) étant chacune symétriques autour d'une ligne centrale axiale ; et
la partie de racine (317) située sur la ligne centrale et centrée angulairement entre la première dent cannelée externe bombée (303) et la seconde dent cannelée externe bombée (305) étant concave, et toute quantité de chute bombée associée à la partie de racine (317) ne dépassant aucune parmi la première chute bombée (A2), la deuxième chute bombée (A1) et la troisième chute bombée (A3).

2. Arbre d'entraînement selon la revendication 1, dans lequel la première chute bombée, la deuxième chute bombée et la troisième chute bombée se trouvent entre une ligne centrale de la première dent cannelée et une surface frontale (307) de la première dent cannelée.
